Europäisches Patentamt

European Patent Office

Office européen des brevets

(11) Veröffentlichungsnummer: **0 268 942**
**A2**

(12) # EUROPÄISCHE PATENTANMELDUNG

(21) Anmeldenummer: 87116681.5

(22) Anmeldetag: 11.11.87

(51) Int. Cl.⁴: **B25J 15/00**

(30) Priorität: 28.11.86 DE 3640677

(43) Veröffentlichungstag der Anmeldung:
01.06.88 Patentblatt 88/22

(84) Benannte Vertragsstaaten:
CH DE FR GB IT LI SE

(71) Anmelder: Siemens Aktiengesellschaft Berlin
und München
Wittelsbacherplatz 2
D-8000 München 2(DE)

(72) Erfinder: Ackermann, Gerhard, Dipl.-Ing. (FH)
Albrecht-Dürer-Weg 10
D-6822 Altlussheim(DE)
Erfinder: Heimüller, Hans-Jost, Dipl.-Ing. (FH)
Am Schafgarten 9
D-6724 Dudenhofen(DE)
Erfinder: Wollenweber, Peter, Dr. rer. nat.
Goldacker 1
D-6751 Kaiserslautern 26(DE)

(54) Greifer zum Handhaben von Teilen.

(57) Der Greifer weist druckluftangetriebene Greiffinger (1) auf, deren Abstand zueinander und deren Greifkraft mit Hilfe von Sperrventilen einstellbar sind. Dabei ermittelt ein Drehpotentiometer (4) die Fingeröffnung und ein Differenzdrucksensor (13) die Greifkraft. Diese Werte werden über Signalleitungen (14) von einer Steuerelektronik verarbeitet, die über Steuerungsleitungen (9) die Sperrventile (8) öffnet oder schließt. Nach Erreichen der eingestellten Werte werden sämtliche Sperrventile (8) gesperrt, so daß die jeweilige Fingerstellung oder Greifkraft erhalten bleibt.

## Greifer zum Handhaben von Teilen

Die Erfindung bezieht sich auf einen Greifer zum Handhaben von Teilen mit Greiffingern, die durch einen steuerbaren Fingerantrieb auf unterschiedliche Positionen einstellbar sind.

Ein derartiger Greifer ist z.B. durch die DE-OS 35 13 989 bekannt geworden. Danach sind die Greiffinger mittels eines Schrittmotors und einer von diesem angetriebenen Zugspindel langhubig verschiebbar und in ihrer Öffnungs-und Schließstellung auf unterschiedliche Greifaufgaben einstellbar. Derartige elektrische Antriebe mit Untersetzungsgetrieben sind jedoch relativ kosten- und raumaufwendig. Viele Roboter weisen an ihren Armen Druckluftanschlüsse für Druckluftzylinder zum Antrieb der Greiffinger auf. Mit dem Druckluftzylinder kann eine hohe Greifkraft mit geringem konstruktiven Aufwand erzeugt werden. Die Greiffinger sind dann jedoch nur zwischen zwei Endstellungen verfahrbar.

Der Erfindung liegt die Aufgabe zugrunde, einen Greifer mit einem Druckluftantrieb so auszubilden, daß unterschiedliche Teile gehandhabt werden können und daß insbesondere unterschiedliche Öffnungs-und Schließstellungen steuerbar eingestellt werden können.

Diese Aufgabe wird durch die Erfindung gemäß Anspruch 1 gelöst. Der wegaufnehmende Sensor kann z.B. als Drehpotentiometer ausgebildet sein, daß mit einer Schwenkachse des Greiffingers verbunden ist. Da der elektrische Status des Drehpotentiometers vom Verdrehwinkel abhängig ist, kann dieses als Weganzeiger verwendet werden, der den ermittelten Wert als analoges Signal der elektronischen Steuerung übermittelt.

Die Ventile sind so ansteuerbar, daß vor dem Erreichen der vorgegebenen Funktionsstellung beide Zuleitungen gesperrt werden und daß der Kolben um eine weitere Druckausgleichsstrecke bis in die gewünschte Funktionsstellung verfährt. Der Kolben kann in dieser Stellung beidseitig vollkommen entlüftet, teilweise oder vollkommen druckbeaufschlagt sein. Sollte die erreichte Iststellung zu stark von der eingestellten Funktionsstellung abweichen, so kann durch einen Druckimpuls auf eine Kolbenseite eine Lagekorrektur vorgenommen werden. Ein solcher Greifer ist konstruktiv einfach aufgebaut. Der Druckluftantrieb hat infolge der geringen Gleitwege eine hohe Lebensdauer und ermöglicht geringe Greifzeiten. Durch die Wegsteuerung können unterschiedliche Teile mit unterschiedlichem Teilungsabstand gegriffen werden, ohne daß ein Greifer-oder Fingerwechsel notwendig ist. Der Druckzylinder kann z.B. durch ein in seiner Mittelstellung fixierbares 5/3 Wege-Ventil angesteuert werden.

Vorteilhafte Weiterbildungen der Erfindung sind in den Ansprüchen 2 bis 4 gekennzeichnet:

Durch die Weiterbildung nach Anspruch 2 bleiben die Zuleitungen zu dem Druckluftzylinder auch bei Stromausfall gesperrt, um zu verhindern, daß gegriffene Teile unvorhergesehen losgelassen werden.

Durch die Weiterbildung nach Anspruch 3 wird zusätzlich zur Wegsteuerung eine Greifkraftsteuerung ermöglicht. Dabei werden die für die Wegsteuerung vorhandenen Ventile für die Greifkraftsteuerung ausgenutzt. Dies erfolgt dadurch, daß nach Erreichen des Differenzdruckes beide Zuleitungen gesperrt werden.

Eine derartige Greifkraftsteuerung ist bei pneumatisch angetriebenen Greiffingern bisher nicht bekannt. Üblich ist es lediglich, in die Druckleitung ein Druckreduzierventil einzusetzen, das von Hand auf die gewünschte Greifkraft einstellbar ist. Eine Änderungsmöglichkeit besteht im Einwechseln eines anders eingestellten Greifers.

Durch die Erfindung ist es möglich, Teile unterschiedlichen Gewichts, unterschiedlicher Festigkeit und Härte und mit empfindlicher oder unempfindlicher Oberfläche in beliebiger Reihenfolge mit unterschiedlicher Greifkraft ohne äußeren Eingriff zu handhaben. Dadurch erweitert sich die Einsatzmöglichkeit des Greifers erheblich. In Verbindung mit der Wegsteuerung kann der Greifer bei geschickter Gestaltung der Greiffinger eine Vielzahl von unterschiedlichen Greifaufgaben ohne Fingerwechsel bewältigen.

Das Verfahren nach Anspruch 4 läßt sich in besonders einfacher Weise durchführen, ohne daß dabei die Ventile durch zu hohe Schaltfrequenz belastet werden. Das bedeutet, daß die Ventile bei jedem Greifzyklus in der Regel nur ein einziges mal betätigt werden. Der empirisch ermittelte Vorgabeweg kann z.B. beim ersten Greifvorgang selbstlernend in die elektronische Steuerung eingespeichert werden. Bei diesem Vorgabeweg wird insbesondere der Reibwiderstand des gesamten Antriebs sowie die Druckdifferenz und das Volumenverhältnis zwischen den beiden Zylinderkammern berücksichtigt.

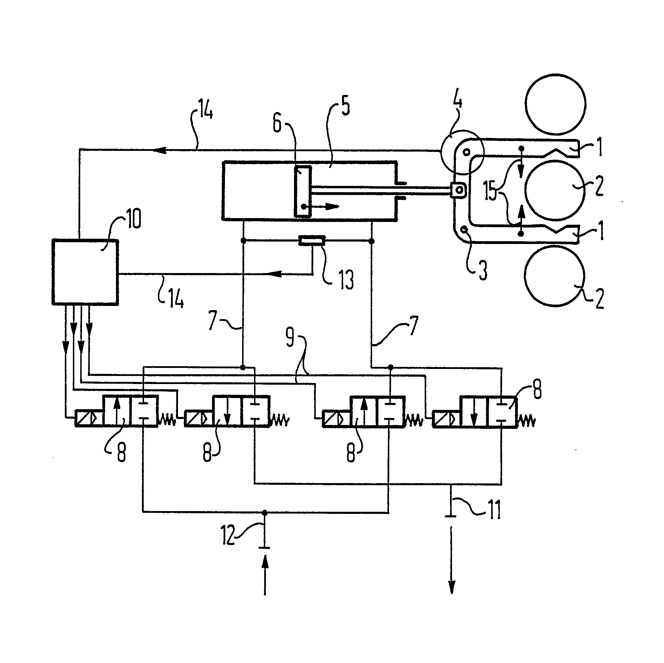

Im folgenden wird die Erfindung anhand eines in der Zeichnung dargestellten Ausführungsbeispieles näher erläutert:

Die dargestellte Figur zeigt schematisiert einen Druckluftantrieb für Greiffinger 1 zum Greifen von Teilen 2. Die Greiffinger 1 sind auf einer Schwenkachse 3 schwenkbar gelagert. Auf einer der Schwenkachsen sitzt ein Drehpotentiometer 4, mit dem die jeweilige Schwenkstellung festgestellt werden kann. Die Greiffinger 1 sind durch einen doppelt wirkenden pneumatischen Druckzylinder 5 angetrieben. Dieser ist zu beiden Seiten eines Druckkolbens 6 mit je einer Druckkammer versehen, in die je eine Zuleitung 7 einmündet. Beide Zuleitungen 7 verzweigen sich zu zwei elektromagnetisch betätigbaren Sperrventilen 8, die über Steuerleitungen 9 mit einer Steuerelektronik 10 in Wirkverbindung stehen. Jeweils eines der Sperrventile 8 ist an eine Entlüfungsleitung 11 angeschlossen. Es ist aber auch möglich, diese beiden Sperrventile direkt zu entlüften. Die beiden anderen Sperrventile 8 sind an eine Druckluftleitung 12 angeschlossen. Mit den beiden Zuleitungen 7 ist ein Differenzdruck sensor 13 verbunden, von dem aus eine Signalleitung 14 zur Steuerelektronik 10 führt. Eine weitere Signalleitung 14 führt vom Drehpotentiometer 4 aus ebenfalls zur Steuerelektronik 10.

Bei der Verwendung von Sperrventilen 8 mit geringem Strömungsquerschnitt ist es möglich, in die Zuleitungen 7 Drosselventile einzufügen. In der dargestellten Lage sind die beiden Greiffinger 1 geöffnet und ist der Druckkolben 6 in einer mittleren Stellung fixiert. Diese Fixierung ist dadurch erreicht, daß sämtliche Sperrventile 8 geschlossen sind. Das Drehpotentiometer 4 gibt Aufschluß über die erreichte Fingerstellung. Die Steuerelektronik 10 veranlaßt gegebenenfalls zur Lagekorrektur. einen kurzen Druckimpuls in einer der beiden Zuleitungen 7. Die Fingeröffnung wird so eingestellt, daß die Greiffinger 1 zwischen benachbarten Teilen 2 hindurchgreifen können.

Durch Druckbeaufschlagung der linken Druckkammer wird der Druckkolben 6 in der dargestellten Pfeilrichtung vorgeschoben und werden die Greiffinger 1 entsprechend den Pfeilen 15 aufeinander zubewegt. Dabei umklammern sie das Teil 2, das dann aus der Reihe der anderen Teile 2 herausgenommen werden kann. Dabei ermittelt der Differenzdrucksensor 13 die Druckdifferenz zwischen den beiden Druckkammern, woraus sich die Greifkraft ergibt. Beim Schließen der Greiffinger 1 sind die beiden äußeren Sperrventile 8 geöffnet und die beiden inneren Sperrventile 8 geschlossen. Dadurch wird der linken Druckkammer Druckluft zugeführt, während die rechte Druckkammer entlüftet wird. Nach Erreichen einer gewählten Druckdifferenz wird durch die Steuerelektronik 10 die Druckluftzufuhr gesperrt, so daß die Greifkraft nicht weiter erhöht wird.

Die Dynamik des Druckaufbaues im pneumatischen Antrieb führt zu kurzfristigen Druckspitzen. Dies kann dazu führen, daß die Steuerelektronik 10 die Sperrventile 8 schließt, bevor der Sollwert erreicht ist. Daher wird die Druckdifferenz nach einem zusätzlichen Zeitintervall nochmals überprüft und gegebenenfalls die Greifkraft durch einen Druckimpuls nachgeregelt. Die Sperrventile 8 sind so gewählt, daß sie bei Stromausfall sperren. Da durch bleibt die Greifkraft auch in diesem Falle weitgehend erhalten, was die Greifsicherheit erhöht.

**Ansprüche**

1. Greifer zum Handhaben von Teilen (2) mit Greiffingern (1), die durch einen steuerbaren Fingerantrieb auf unterschiedliche Teile einstellbar sind, **dadurch gekennzeichnet,** daß der Fingerantrieb als Antriebsorgan einen doppelt wirkenden pneumatischen Druckzylinder (5) aufweist, daß mit dem Fingerantrieb zumindest ein wegaufnehmender Sensor (z.B. 4) verbunden ist, daß Zuleitungen (7) zum Druckzylinder (5) mit elektrisch betätigbaren Ventilen (z.B. 8) versehen sind, die durch eine Steuerelektronik (10) ansteuerbar sind, daß die Ventile an beiden Zuleitungen (7) unabhängig oder gleichzeitig in einen gleichen Schaltzustand stellbar sind und daß ein Druckkolben (6) des Druckzylinders (5) in einer beliebigen Stellung fixierbar ist.

2. Greifer nach Anspruch 1, **dadurch gekennzeichnet,** daß jeder Zuleitung (7) zwei Sperrventile (8) zugeordnet sind, von denen eines die Druckluftzufuhr und das andere die Entlüftung der Zuleitung (7) steuert und daß sämtliche Sperrventile (8) bei Stromausfall ihre Sperrstellung einnehmen.

3. Greifer mit Mitteln zur Veränderung der Greifkraft insbesondere nach Anspruch 1 oder 2, **dadurch gekennzeichnet,** daß zwischen den beiden Zuleitungen (7) zum Druckzylinder (5) ein Sensor (z.B. 13) zur Ermittlung des Differenzdruckes vorgesehen ist, von dem eine Signalleitung (14) zur Steuerelektronik (10) führt und daß zwischen den beiden Zylinderseiten zur Steuerung der Greifkraft unterschiedliche Druckdifferenzen einstellbar sind.

4. Verfahren zur Wegsteuerung von Greiffingern in einem Greifer nach Anspruch 1 oder 2, **dadurch gekennzeichnet,** daß der Druckkolben (6) des Druckzylinders (5) zunächst von einer Seite her mit Druckluft beaufschlagt wird und zugleich oder verzögert die andere Zylinderseite entlüftet wird, daß vor Erreichen der Sollstellung die beiden Zu leitungen (7) gesperrt werden und daß sodann der Druckkolben (6) ohne weitere äußere Einwirkung um einen empirisch ermittelten Vorgabeweg in seine vorgegebene Funktionsstellung verfährt.